# EUROPÄISCHE PATENTSCHRIFT

(11) **EP 0 994 446 B1**
(45) Veröffentlichungstag und Bekanntmachung des Hinweises auf die Patenterteilung: **17.12.2003**
(21) Anmeldenummer: 99119433.3
(22) Anmeldetag: 30.09.1999
(51) Int. Cl.: G07F 7/10, G06K 19/073

(54) **System zur Verarbeitung von Informationen und Informationsträger**
Information processing system and information carrier
Système de traitement d'informations et support d'informations

(30) Priorität: 14.10.1998 DE 19847414
(43) Veröffentlichungstag der Anmeldung: 19.04.2000
(73) Patentinhaber: Orga Kartensysteme GmbH, 33104 Paderborn (DE)
(72) Erfinder: Fretter, Ralf, 33102 Paderborn (DE); Hesse-Pfennings, Uta, 34439 Willebadessen (DE); Schwier, Andreas, 32429 Minden (DE)

(56) Entgegenhaltungen:
- EP-A- 0 332 117
- EP-A- 0 644 513
- US-A- 4 816 653

## Beschreibung

Die Erfindung betrifft ein System zur Verarbeitung von Informationen und einen Informationsträger.

Die in einem tragbaren Informationsträger, insbesondere in einer Chipkarte, abgespeicherten Informationen sind üblicherweise in unterschiedlichen Dateien gespeichert. Diese Dateien weisen jeweils einen ersten Bereich auf, in dem die Informationen gespeichert sind, und weisen einen weiteren Bereich auf, in dem Steuerinformationen bzw. Zugriffsinformationen der betreffenden Datei steht. Der Zugriff auf einen Datensatz einer Datei ist nur möglich, wenn die entsprechenden Zugriffsbedingungen erfüllt sind. Nachteilig an der bekannten Dateistruktur ist, daß jede Datei nur einen begrenzten Umfang von Informationen speichern kann. Falls mehreren Nutzern ein Zugriff auf die jeweils zugeordneten Informationen gewährt werden soll, ist es erforderlich, jedem Nutzer eine eigene Datei mit entsprechenden Zugriffsbedingungen zuzuordnen. Nachteilig hieran ist jedoch, daß bei Ermöglichung des Zugriffs von gleichen Informationen an unterschiedliche Nutzer ein erheblicher Speicherbedarf erforderlich ist.

Aufgabe der Erfindung ist es daher, ein System zur Verarbeitung von Informationen und einen Informationsträger anzugeben, so daß ein Zugriff einer Mehrzahl von unterschiedlichen Nutzern auf in der Chipkarte abgespeicherte Informationen ermöglicht wird, wobei der Speicherbedarf auf der Chipkarte möglichst gering ist.

Zur Lösung dieser Aufgabe weist die Erfindung zusätzlich die kennezeichnenden Merkmale, der Patentansprüche 1 und 5 auf, die jeweils gegen die Offenbarung der EPO 644 513 A abgegrenzt sind, die den nächstliegenden Stand der Techik bildet.

Der besondere Vorteil der Erfindung besteht darin, daß eine Zugriffszone mit einem mehrdimensionalen Zugriffsfeld geschaffen wird, das den Zugriff auf alle in den Dateien der Chipkarte abgespeicherten Informationen steuert. Das Zugriffsfeld ist matrixartig ausgebildet und weist zum einen Verschlüsselungsvektoren auf, die jeweils Zugriffsinformationen zu unterschiedlichen Bereichen der in der Chipkarte gespeicherten Informationen aufweisen. Zum anderen ist ein Speicherindexvektor vorgesehen, der die Bereiche des Speichers kennzeichnenden Adressen aufweist. Vorteilhafterweise kann das Zugriffsfeld einfach erweitert werden, falls beispielsweise ein Nutzer hinzukommt. In diesem Fall braucht nur ein weiterer Verschlüsselungsvektor generiert werden, der die dem Nutzer zugewiesenen Zugriffsinformationen enthält. Ein Speicherindexvektor kann unverändert bleiben, sofern keine weiteren Informationen abgespeichert werden sollen. Somit kann auf einfache Weise der Zugriff von einer Mehrzahl von abgespeicherten Informationen auf eine Mehrzahl von Nutzern gesteuert werden.

Ein Ausführungsbeispiel der Erfindung wird nachfolgend anhand der Zeichnungen näher beschrieben.

Es zeigen:
- Figur 1:: ein Blockschaltbild eines erfindungsgemäßen Systems und
- Figur 2:: eine schematische Darstellung eines Zugriffsfelds.

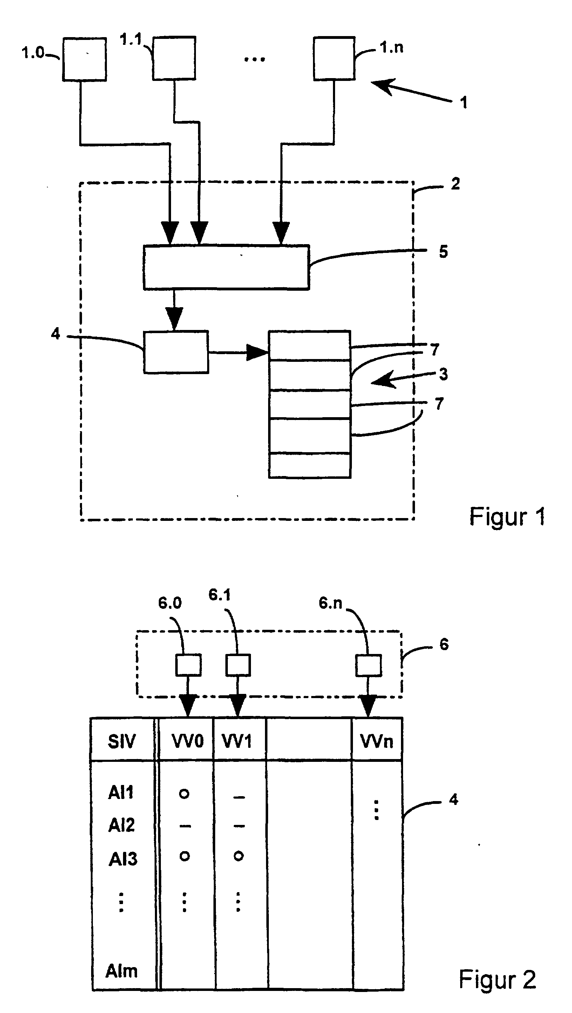

In Figur 1 ist ein System zur Verarbeitung von Informationen dargestellt, das aus einer Mehrzahl von Datenverarbeitungseinheiten 1, 1.0, 1.1, 1.n, die jeweils mit einer Chipkarte 2 in Verbindung stehen können, besteht. Die Datenverarbeitungseinheiten 1 sind jeweils über ein nicht dargestelltes Kartenlesegerät mit der Chipkarte 2 verbindbar, so daß Informationen bidirektional zwischen einer Datenverarbeitungseinheit 1 und der Chipkarte 2 ausgetauscht werden können.

Die Chipkarte 2 weist einen nicht dargestellten Mikroprozessor auf, der die Kommunikation zwischen der Chipkarte 2 und einer der Datenverarbeitungseinheiten 1 steuert. Die Informationen sind auf der Chipkarte 2 in einem Speicher 3 gespeichert. Der Speicher 3 ist vorzugsweise als EEPROM-Speicher ausgebildet und weist mehrere Datensätze 7 auf, in denen jeweils eine Information abgespeichert ist. Dem Speicher 3 ist ein Zugriffsfeld 4 zugeordnet, das die Zugriffsrechte der einzelnen Datenverarbeitungseinheiten 1 zu den in dem Speicher 3 gespeicherten Informationen festgelegt. Ferner weist die Chipkarte 2 eine Authentifizierungseinheit 5 auf, die sichergestellt, daß eine externe Datenverarbeitungseinheit 1 nur dann einen Zugriff auf gespeicherten Informationen erhält, wenn die Übereinstimmung zwischen einem bestimmten elektronischen Schlüssel einer entsprechenden Datenverarbeitungseinheit 1, 1.0, 1.1, 1.n mit einem für diese Datenverarbeitungseinheit 1, 1.0, 1.1, 1.n zugewiesenen Schlüssel 6, 6.0, 6.1, 6.n auf der Chipkarte 2 festgestellt wird.

Anhand Figur 2 wird im folgenden die Funktionsweise des Zugriffsfeldes 4 näher beschrieben. Die Zugriffszone 4 ist matrixartig aufgebaut. Sie weist eine Mehrzahl von Spalten auf, wobei eine erste Spalte durch einen Speicherindexvektor SIV und weitere Spalten als Verschlüsselungsvektoren VV0, VV1 etc. ausgebildet sind. Der Speicherindexvektor SIV weist die Zuordnungsfunktionen bzw. Speicheradressen AI1, AI2, ... AIm der jeweils als Datensätze in dem Speicher 3 abgespeicherten Informationen auf. Die Verschlüsselungsvektoren VV0, VV1, ... VVn weisen jeweils Zugriffsinformationen auf und sind den einzelnen Datenverarbeitungseinheiten 1.0, 1.1, ... 1.n zugeordnet.

Sobald beispielsweise ein Schlüssel 6.1 der Datenverarbeitungseinheit 1.1 durch einen Vergleich in der Authentifizierungseinheit 5 überprüft und bei positivem Ergebnis die Datenverarbeitungseinheit 1.1 identifiziert worden ist, weisen die in dem Verschlüsselungsvektor VV1 gespeicherten Zugriffsinformationen der Datenverarbeitungseinheit 1.1 die vorgegebenen zugreifbaren Speicheradressen zu. In dem vorliegenden Ausführungsbeispiel wird der Datenverarbeitungseinheit 1.1 lediglich die Speicheradresse AI3 zugewiesen (durch einen Kreis gekennzeichnet). Die weiteren Adressen AI1, AI2 etc. sind vor einem Zugriff durch die Datenverarbeitungseinheit 1.1 geschützt.

Dem Verschlüsselungsvektor VV0 der ersten Datenverarbeitungseinheit 1.0 sind die Speicheradressen AI1 und AI3 zugewiesen. Die Speicheradresse AI2 ist dem Verschlüsselungsvektor VV0 nicht zugewiesen, so daß nur die durch die Adressen AI1 und AI3 gekennzeichneten Datensätze 7 zugreifbar sind. Vorteilhaft ist dieses Zugriffsfeld 4 beliebig in Abhängigkeit von der Anzahl der hinzukommenden Datenverarbeitungseinheiten erweiterbar. Es braucht lediglich ein weiterer Verschlüsselungsvektor generiert und im EEPROM-Speicher abgespeichert werden.

Die Erfindung ist überall dort einsetzbar, wo mehreren Nutzern Zugriff auf einen jeweils ihnen zugewiesenen Teil der in dem Speicher 3 der Chipkarte 2 gespeicherten Informationen gewährt werden soll. Die Erfindung könnte beispielsweise zur Vereinfachung des Asylverfahrens dienen. Dabei erhält der Asylsuchende eine Chipkarte, die alle relevanten Informationen, wie z.B. Name, Geburtsdatum, Staatsangehörigkeit etc. enthält. Dem Asylsuchenden kann ein Verschlüsselungsvektor zugeordnet sein, der den Zugriff auf alle gespeicherten Informationen ermöglicht. Jeder Behörde, beispielsweise der Ausländerbehörde oder den Meldebehörden, kann ein Verschlüsselungsvektor zugeordnet werden, der die Zugriffsrechte festlegt. Dabei kann jeder Behörde durch den Verschlüsselungsvetor zweckgebundene Informationen zugewiesen werden, die vor dem Zugriff anderer Behörden geschützt sind. Es wird somit einerseits die Datensicherheit erhöht und andererseits einem Mißbrauch der staatlichen Leistungen vorgebeugt. Denn die Chipkarte dient mit dem beschreibbaren Speicher 3 als Informationsträger, in dem alle erforderlichen Informationen stets aktualisiert werden können.

## Patentansprüche

1. System zur Verarbeitung von Informationen mit
- einer Mehrzahl von örtlich verteilt angeordneten Datenverarbeitungseinheiten (1) zur Speicherung und Verarbeitung von Informationen,
- mindestens einem tragbaren Informationsträger (2) mit einem nicht flüchtigen Speicher (3), wobei der nicht flüchtige Speicher (3) eine Zugriffszone mit Speicherzugriffsbefehlen für den Zugriff auf eine Speicheradresse (AI1, AI2) des Speichers (3) aufweist,
- einer Schreib/Leseeinheit zur Ermöglichung der Kommunikation zwischen dem Informationsträger (2) und der Datenverarbeitungseinheit (1),
**dadurch gekennzeichnet,**
**dass** die Zugriffszone des Speichers (3) als ein mehrdimensionales Zugriffsfeld (4) ausgebildet ist mit einer zu der Anzahl der Datenverarbeitungseinheiten (1, 1.0, 1.1, 1.n) korrespondierenden Anzahl von Verschlüsselungsvektoren (VV0, VV1), die jeweils Zugriffsinformationen über den Zugriff auf unterschiedliche, durch entsprechende Speicheradressen (AI1, AI2) gekennzeichnete Informationen des Speichers (3) aufweisen und jeweils einem gemeinsamen, die Speicheradressen (AI1, AI2) aufweisenden Speicherindexvektor (SIV) zugeordnet sind und dass die Verschlüsselungsvektoren (VV0, VV1) jeweils einer einzigen Datenverarbeitungseinheit (1, 1.0, 1.1, 1.n) über einen geheimen Schlüssel (6.0, 6.1) zugreifbar sind.

2. System nach Anspruch 1, **dadurch gekennzeichnet, daß** die Datenverarbeitungseinheit (1, 1.0, 1.1, 1.n) jeweils durch Ablauf einer Authentifikation den Zugriff auf den entsprechenden Verschlüsselungsvektor (VV0, VV1) erhält.

3. System nach einem der Ansprüche 1 bis 2, **dadurch gekennzeichnet, daß** die Bereiche des Speichers (3) als fortlaufende Datensätze ausgebildet sind, die einzeln durch Speicheradressen (AI1, AI2) adressierbar sind.

4. Informationsträger zur Speicherung und Verarbeitung von Informationen mit einem nicht flüchtigen Speicher und einem Mikroprozessor, wobei der nicht flüchtige Speicher eine Zugriffszone mit Speicherzugriffsbefehlen für den Zugriff auf eine Speicheradresse des Speichers aufweist, **dadurch gekennzeichnet, daß** die Zugriffszone als mehrdimensionales Zugriffsfeld (4) ausgebildet ist mit einer zu der Anzahl der Datenverarbeitungseinheiten (1, 1.0, 1.1, 1.n) korrespondierenden Anzahl von Verschlüsselungsvektoren (VV0, VV1), die jeweils zugriffsinformationen über den Zugriff auf unterschiedliche, durch entsprechende Speicheradressen (AI1, AI2) gekennzeichnete Informationen des Speichers (3) aufweisen und jeweils einem die Speicheradressen (AI1, AI2) aufweisenden Speicherindexvektor (SIV) zugeordnet sind und dass die jeweils einer Datenverarbeitungseinheit (1) zugeordneten Verschlüsselungsvektoren (VV0, VV1) eine Reihe von Zugriffsinformationen enthalten, wobei der Zugriff auf die Zugriffsinformationen durch einen Schlüssel (6.0, 6.1) gesichert ist.

5. Informationsträger nach Anspruch 4, **dadurch gekennzeichnet, daß** die in dem Speicherindexvektor (SIV) gespeicherten Adressen (AI1, AI2) jeweils einen Datensatz des Speichers (3) bezeichnen.

## Claims

1. System for processing information having
- a plurality of geographically distributed data processing units (1) for storing and processing information,
- at least one portable information carrier (2) with a non-volatile storage means (3), wherein the non-volatile storage means (3) has an access zone with storage access commands for accessing a storage address (AI1, AI2) of the storage means (3),
- a read/write unit for enabling communication between the information carrier (2) and the data processing unit (1 ),
**characterized in that** the access zone of the storage means (3) is designed as a multidimensional access field (4) having a number of encryption vectors (VV0, VV1) corresponding to the number of data processing units (1, 1.0, 1.1, 1.n), which vectors contain in each case access information about access to different information of the storage means (3) which is indicated by corresponding storage addresses (AI1, AI2), and are assigned in each case to a common storage index vector (SIV) containing the storage addresses (AI1, AI2), and **in that** the encryption vectors (VV0, VV1) of a single data processing unit (1, 1.0, 1.1, 1.n) in each case can be accessed via a secret cipher (6.0, 6.1).

2. System according to claim 1, **characterized in that** the data processing unit (1, 1.0, 1.1, 1.n) obtains access to the respective encryption vector (VV0, VV1) by means of an authentication process in each case.

3. System according to one of claims 1 to 2, **characterized in that** the areas of the storage means (3) are designed as sequential data records that can be addressed individually by means of storage addresses (AI1, AI2).

4. Information carrier for storing and processing information having a non-volatile storage means and a microprocessor, in which the non-volatile storage means has an access zone with storage access commands for access to a storage address of the storage means, **characterized in that** the access zone is designed as a multidimensional access field (4) having a number of encryption vectors (VV0, VV1) corresponding to the number of data processing units (1, 1.0, 1.1, 1.n), which vectors contain in each case access information about access to different information of the storage means (3) which is indicated by corresponding storage addresses (AI1, AI2), and are assigned in each case to a storage index vector (SIV) containing the storage addresses (AI1, AI2), and **in that** the encryption vectors (VV0, VV1) assigned in each case to a data processing unit (1 ) contain a range of access information, with access to the access information being protected by means of a cipher (6.0, 6.1 ).

5. Information carrier according to claim 4, **characterized in that** the addresses (AI1, AI2) stored in the storage index vector (SIV) designate one data record of the storage means (3) in each case.

## Revendications

1. Système pour le traitement d'informations avec
- plusieurs unités de traitement de données (1), disposées, réparties localement, pour la mémorisation et le traitement d'informations,
- au moins, un support d'informations portable (2) avec une mémoire non volatile (3), ladite mémoire volatile (3) présentant une zone d'accès avec des commandes d'accès à une adresse de mémoire (Al1, Al2) de la mémoire (3),
- une unité écriture / lecture pour permettre la communication entre le support d'informations (2) et l'unité de traitement des données (1),
**caractérisé en ce que**
la zone d'accès de (3) est conçue en tant que champ d'accès multidimensionnel (4) avec un nombre de vecteurs de codage (VV0, VV1) correspondant au nombre des unités de traitement des donnée (1, 1.0, 1.1, 1.n), lesquels vecteurs présentent respectivement des informations d'accès relatives à l'accès à différentes informations de la mémoire (3), désignées par des adresses de mémoire adéquates (Al1, Al2), et sont alloués respectivement à un vecteur d'index de mémoire (SIV) commun, présentant les adresses de mémoire (Al1, Al2), et que les vecteurs de codage (VV0, VV1) d'une seule unité de traitement de données (1, 1.0, 1.1, 1.n) sont respectivement accessibles par l'intermédiaire d'une clé secrète (6.0, 6.1).

2. Système selon la revendication 1,
**caractérisé en ce que** l'unité de traitement des données (1, 1.0, 1.1, 1.n) obtient l'accès au vecteur de codage correspondant (VV0, VV1) par déroulement d'une authentification respective.

3. Système selon l'une des revendications 1 à 2,
**caractérisé en ce que**
les zones de la mémoire (3) sont conçus en tant que jeux de données continus qui sont individuellement adressables à l'aide d'adresses de mémoire (Al1, Al2).

4. Support d'informations pour la mémorisation et le traitement d'informations avec une mémoire non volatile et un microprocesseur, ladite mémoire non volatile présentant une zone d'accès avec des commandes d'accès à la mémoire pour l'accès à une adresse de mémorisation,
**caractérisé en ce que**
la zone d'accès est conçue en tant que champ d'accès multidimensionnel (4) avec un nombre de vecteurs de codage (VV0, VV1) correspondant au nombre des unités de traitement des données (1, 1.0, 1.1, 1.n), , lesquels vecteurs de codage présentent respectivement des informations d'accès relatives à l'accès à différentes informations de la mémoire (3), désignées par des adresses de mémoire (Al1, Al2) et sont alloués chacun à un vecteur d'index de mémoire (SIV) présentant les adresses de mémoire (Al1, Al2),
et que les vecteurs de codage (VV0, VV1), associés chacun à une unité de traitement des données (1) contiennent une série d'informations d'accès, l'accès aux informations d'accès étant sécurisé par une clé (6.0, 6.1).

5. Support d'informations selon la revendication 4,
**caractérisé en ce que**
les adresses (Al1, Al2), mémorisées dans le vecteur d'index de mémoire (SIV) désignent chacune un jeu de données de la mémoire (3).
